# FASCICULE DE BREVET EUROPEEN

(11) **EP 1 229 680 B1**
(45) Date de publication et mention de la délivrance du brevet: **15.06.2005**
(21) Numéro de dépôt: 02290212.6
(22) Date de dépôt: 30.01.2002
(51) Int. Cl.: H04L 1/00, H04L 1/20

(54) **Estimation du debit de données d'un modem à l'aide d'une estimation de la qualité basé à corrélation**
Modemratenschätzung mittels korrelation basierte qualitätsschätzung
Modem rate estimation using correlation based quality estimation

(30) Priorité: 30.01.2001 FR 0101208
(43) Date de publication de la demande: 07.08.2002
(73) Titulaire: SAGEM S.A., 75015 Paris (FR)
(72) Inventeur: Boulanger, Christophe, 75013 Paris (FR)
(74) Mandataire: Bloch, Gérard

(56) Documents cités:
- US-A- 5 870 429
- US-A- 5 991 273
- US-A- 6 167 031

## Description

La présente invention concerne la mise en service d'une liaison de transmission de données reliant deux modems.

Pour que des modems puissent échanger des données de manière efficace, ils doivent caractériser la liaison ou canal les reliant, c'est-à-dire déterminer le débit maximal pour lequel les données sont reçues sans erreurs. Dans une phase de test, de préactivation pour une négociation de débit, ils échangent, à un débit préalablement spécifié, des stimuli de sondage de la liaison sous forme de motifs pseudo-aléatoires de symboles de codage en ligne, représentant des bits de données embrouillés selon un polynôme connu, et le modem récepteur analyse le signal analogique reçu pour déterminer sa corrélation avec le motif attendu et ainsi mesurer la distorsion apportée par la liaison, c'est-à-dire la qualité, plus précisément la non-qualité de celle-ci, limitant le débit maximal possible.

Pour chaque type de modulation, a priori fixé par la structure des modems, et pour chaque débit symbole et chaque motif, le résultat de corrélation fournit une réponse impulsionnelle représentant l'énergie reçue, distordue et entachée de bruit, dont la forme caractérise l'aptitude de la liaison à transmettre à des débits élevés.

Pour que la phase de test donne un résultat exploitable, le débit est fixé à une valeur relativement faible, qui n'est donc pas le débit maximal recherché. Un essai à un deuxième débit, mais trop élevé, indiquerait uniquement que la liaison ne peut pas fonctionner et ne constituerait donc pas une mesure exploitable.

Le document US 5 870 429 propose un dispositif et un procédé pour déterminer le débit optimal parmi une échelle de débits possibles dans le cadre du protocole V24, grâce au calcul d'un seuil permettant de situer rapidement le débit admissible le plus proche. On ne peut donc pas actuellement effectuer deux mesures de taux d'erreur dans les bits reçus à deux débits respectifs pour tenter de déterminer par interpolation le débit maximal possible, optimisant l'efficacité de la liaison.

La présente invention vise à proposer une solution pour déterminer ce débit maximal de la liaison.

A cet effet, l'invention concerne tout d'abord un procédé de mise en service d'une liaison de transmission de données reliant deux modems, dans lequel, dans une phase initiale de préactivation pour caractériser la qualité de la liaison,
- les modems échangent un train de motifs prédéterminés de symboles de données à un débit spécifié et à un niveau d'émission déterminé, et
- chaque modem effectue un calcul de corrélation entre les motifs reçus et les motifs prédéterminés attendus, pour déterminer des courbes de réponse impulsionnelle de la liaison au débit spécifié et les comparer à une courbe de réponse impulsionnelle nominale afin d'en déterminer les différences, et ainsi estimer une qualité de liaison, et
- la liaison est activée si la qualité de liaison est supérieure à un seuil minimal déterminé,
- on compare entre elles les courbes de réponse impulsionnelle des motifs reçus pour mesurer leurs écarts relatifs et en calculer un taux de bruit du train de motifs au débit considéré,
- on effectue toutes les étapes ci-dessus pour une pluralité de trains ayant chacun un débit spécifique,
procédé caractérisé par le fait que, dans la phase de préactivation,
- on estime la sensibilité de la valeur de taux de bruit par rapport au débit, en déterminant une courbe de taux de bruit à partir d'au moins deux points représentant deux paires des valeurs taux de bruit-débit associé,
- on recherche une valeur de débit maximal admissible correspondant à l'intersection de la courbe de taux de bruit avec un seuil haut de taux de bruit correspondant théoriquement à un seuil minimal de qualité admissible de la liaison, et
- on transmet, au modem émetteur des trains, la valeur de débit maximal pour activer la liaison à un débit limité en fonction du débit maximal.

Ainsi, on obtient un résultat de mesure se rapportant à un débit pouvant être supérieur au débit optimal recherché, par le fait qu'on effectue une analyse fine des signaux reçus, en déterminant leur taux de bruit, et non uniquement la valeur logique qu'ils représentent. Comme le taux de bruit évolue de façon progressive entre les points de mesure aux divers débits, on peut donc effectuer une interpolation valable pour trouver le débit maximal. On peut aussi obtenir le débit maximal par extrapolation des mesures.

Avantageusement, pour calculer le taux de bruit, à chaque débit,
- on compose ensemble les réponses impulsionnelles pour obtenir une réponse impulsionnelle moyenne représentant une moyenne du signal utile reçu,
- on calcule les écarts des réponses impulsionnelles par rapport à la réponse impulsionnelle moyenne et
- on calcule le taux de bruit à partir des écarts, rapportés à la moyenne du signal utile et,
chaque réponse impulsionnelle étant représentée par une rangée de coefficients en nombre déterminé, pour chaque débit :
- on calcule les écarts des divers coefficients des diverses réponses impulsionnelles avec les coefficients de même rang de la réponse impulsionnelle moyenne associée,
- on calcule la valeur quadratique des écarts, et
- on calcule la somme des valeurs quadratiques pour obtenir une puissance moyenne de bruit, que l'on rapporte à la puissance moyenne de signal pour obtenir le taux de bruit.

En particulier, si l'on décale d'une valeur déterminée le niveau d'émission de la liaison activée par rapport au niveau d'émission lors de la préactivation, on décale alors sensiblement d'autant le seuil haut de taux de bruit de façon relative par rapport aux taux de bruit calculés, pour déterminer un nouveau débit maximal.

L'invention concerne aussi un modem pour la mise en oeuvre du procédé de l'invention, comportant des moyens de réception pour recevoir, d'une liaison de transmission de données, des signaux représentant des motifs de symboles de données, les moyens de réception commandant des moyens de calcul agencés pour comparer les motifs reçus à des motifs prédéterminés et en déterminer une courbe de réponse impulsionnelle de la liaison, caractérisé par le fait que les moyens de calcul sont agencés pour déterminer une pluralité de trains de courbes de réponse impulsionnelle, correspondant à une pluralité de trains de motifs à une pluralité de débits respectifs, pour comparer entre elles les courbes de réponse impulsionnelle de chaque train et en déterminer des écarts relatifs représentant un taux de bruit au débit du train considéré et les moyens de calcul sont agencés pour comparer les taux de bruit à une valeur prédéterminée de seuil haut de taux de bruit et en déterminer un débit maximal.

L'invention sera mieux comprise à l'aide de la description suivante d'un mode préféré de mise en ceuvre du procédé de l'invention, en référence au dessin annexé, sur lequel :
- la figure 1 représente une liaison de transmission de données reliant deux modems pour la mise en oeuvre du procédé de l'invention,
- la figure 2 représente des trains de motifs de données de test de la liaison,
- la figure 3 représente des courbes de réponse impulsionnelle de la liaison,
- la figure 4 représente une courbe de taux de bruit en fonction du débit de liaison, et
- la figure 5 représente un bloc de calcul du taux de bruit.

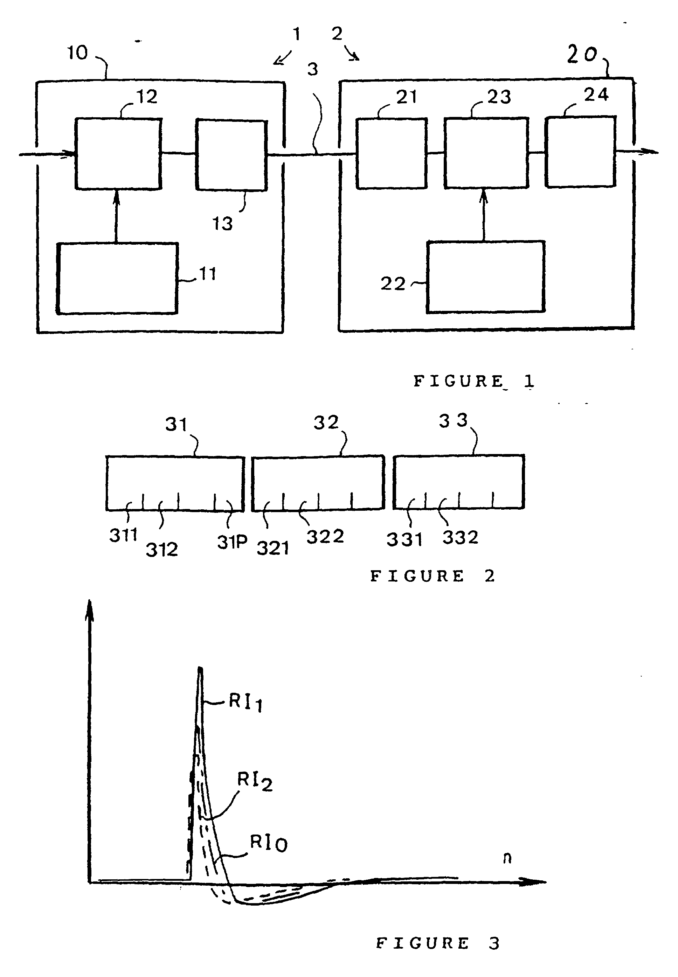

La figure 1 représente deux modems 1, 2 reliés par une liaison 3 de transmission de données, ici une paire torsadée de fils d'une ligne téléphonique.

Le modem 1 est ici représenté par uniquement une chaîne d'émission 10 comprenant un bloc d'embrouillage 12, commandé par un bloc 11 de fourniture d'un polynôme d'embrouillage, pour embrouiller des bits engendrés localement (flèche à gauche) et les émettre sur la liaison 3 à travers un bloc d'interface 13 comportant un émetteur de signaux adapté aux caractéristiques physiques de la liaison 3. Les bits sont émis sous la forme de symboles de données représentant chacun un bloc de bits de longueur fixe et de valeur particulière.

Le modem 2 est ici représenté par uniquement une chaîne de réception 20 comprenant une interface 21 de réception des symboles de la liaison 3, avec ici transposition de fréquence, qui retransmet les symboles reçus à un bloc de corrélation 23, commandé par un bloc 22 de fourniture des séquences ou mots de corrélation utilisés par le modem émetteur 1, le bloc 23 fournissant les résultats de corrélation à un bloc numérique 24 de traitement de ceux-ci.

Les modems 1 et 2 sont ici identiques, c'est-à-dire que le modem 1 comporte une chaîne de réception semblable à celle du modem 2, qui lui-même comporte une chaîne d'émission semblable à celle du modem 1.

La figure 2 représente schématiquement des trains de motifs de symboles émis par le modem 1 dans une phase de préactivation de la liaison 3.

La phase de préactivation a pour but de mesurer la distorsion de propagation des symboles apportée par la liaison 3. En effet, la liaison 3 atténue différemment les diverses composantes fréquentielles des symboles, en particulier atténue notablement celles aux fréquences élevées, et, en outre, la liaison 3 propage ces composantes à des vitesses différentes, ce qui provoque des débordements temporels d'intermodulation entre symboles successifs.

Chaque symbole a une forme particulière qui correspond à la valeur particulière du bloc de bits. Le nombre des symboles possibles est donc égal au nombre de combinaisons différentes de bits dans un bloc de longueur déterminée.

Sur la figure 2 est représentée une pluralité de D = 3 trains successifs 31, 32, 33 de motifs de symboles émis par le modem 1 pour effectuer la préactivation, c'est-à-dire sonder la liaison 3 pour en déterminer les caractéristiques de distorsion dans les conditions de l'essai.

Les trains 31, 32, 33 sont respectivement émis à trois vitesses ou débits différents D1, D2, D3, classés ici par valeurs croissantes. Chaque train 31, 32, 33 est ici constitué d'une pluralité P de mots ou motifs 311, 312,..., 31P, 321, 322,..., 331, 332,..., de N symboles chacun, avec ici P = 16 et N = 255.

D'une façon générale, la détermination de la distorsion pourrait être effectuée avec P = 1 mais une valeur supérieure permet une mesure plus précise. Les valeurs P et N pourraient en outre varier d'un train à l'autre.

Le modem récepteur 2 effectue, dans le bloc 23, le calcul de corrélation des P motifs de symboles reçus avec ceux attendus, ce qui fournit P courbes de réponse impulsionnelle pour chaque débit D. La figure 3 représente deux courbes de réponse impulsionnelle, RI1 et RI2 au débit D1. Comme illustré, une réponse impulsionnelle présente une forme de pic d'impulsion principale qui s'atténue en oscillant, l'axe des abscisses représentant une rangée de coefficients n, dont, en théorie, un seul représente la totalité du signal utile reçu et les autres sont nuls. En pratique, chaque symbole reçu étant distordu et bruité, sa corrélation avec la forme du symbole attendu, ou forme nominale théorique du symbole émis, n'est pas parfaite et le spectre des amplitudes des autres coefficients représente les deux défauts évoqués ci-dessus.

L'analyse de corrélation de chaque symbole reçu consiste donc à effectuer un calcul de corrélation avec chacun des symboles possibles, et seul le symbole nominal semblable au symbole émis produit le pic ci-dessus, les autres ne fournissant qu'une réponse plate.

Lors de la phase de préactivation, le calcul de corrélation fournissant une courbe de réponse comme RI1 et RI2 ne porte pas uniquement sur un seul symbole mais sur la séquence des N symboles d'un mot.

Le procédé de l'invention va maintenant être expliqué plus en détails.

Pour mettre en service la liaison 3, par la phase initiale de préactivation visant à sonder la liaison, afin de la caractériser en ce qui concerne sa distorsion,
- les modems 1 et 2 échangent les D trains 31, 32 , 33 ayant chacun plusieurs (au moins P = 2) mots ou motifs prédéterminés 311, 312, 31P, 321, 322, 331, 332 de symboles de données au débit spécifié pour chaque train 31, 32, 33, et à un niveau d'émission déterminé, et
- chaque modem 1, 2 effectue pour chaque train 31, 32, 33, par les blocs 22, 23, un calcul de corrélation entre les P motifs 311, 312, 31P, 321, 322, 331, 332 reçus et les motifs prédéterminés attendus, pour déterminer des courbes de réponse impulsionnelle de la liaison 3 à chacun des D débits respectifs de train, et les comparer à une courbe de réponse impulsionnelle nominale afin d'en déterminer des différences représentant une qualité de liaison, et permettant donc d'estimer celle-ci, et
- la liaison 3 est activée à un débit pour lequel la qualité de liaison est supérieure à un seuil minimal, la détermination de ce débit étant expliquée ci-après.

L'activation de la liaison 3 consiste, dans le cas d'un processus classique, à transmettre, au modem émetteur 1, le spectre ou histogramme des coefficients de la réponse impulsionnelle moyenne relative à un débit déterminé unique, pour que le modem émetteur 1 applique une contre-distorsion correspondante aux données utiles qu'il va émettre. La distorsion étant une caractéristique stable, ou lentement variable, on peut prévoir ses effets et donc appliquer des mesures préventives. Le bruit est par contre essentiellement aléatoire et représente un état de fait auquel il faut s'adapter en limitant le débit.

Dans la présente invention, plusieurs (D) débits sont testés pour obtenir D ensembles de la P courbes ou spectres de coefficients de réponse impulsionnelle.

La liaison 3 est alors activée pour fonctionner à un débit optimal, ou maximal, déterminé à partir de plusieurs des D courbes de réponse impulsionnelle.

Comme indiqué, la figure 3 représente les deux courbes de réponse impulsionnelle RI1 et RI2 parmi les P = 16 obtenues au débit D1 et la courbe RI0 représente la moyenne des P courbes comme RI1, RI2. Les coefficients de filtrage de corrélation, formant l'histogramme représentant les courbes ci-dessus, sont rangés en abscisse d'après leur rang n.

Pour chaque débit, les réponses impulsionnelles comme RI1, RI2 sont comparées entre elles pour mesurer leurs écarts relatifs et en calculer ou déduire un taux de bruit du train de motifs considéré 31, 32, 33, donc au débit D1, D2, D3 considéré.

Les écarts ci-dessus, chacun exprimé sous la forme d'un jeu de valeurs des coefficients, fournissent en fait, par cumul et division par P pour normer le résultat, un niveau absolu de bruit moyen. Le taux de bruit T est calculé en normant le niveau de bruit absolu moyen par l'amplitude de signal utile, c'est-à-dire sensiblement l'amplitude du pic de réponse impulsionnelle. On conçoit que la division par P est optionnelle puisque le résultat final, le taux de bruit T, est un rapport de deux nombres établis chacun à partir de P valeurs.

Comme, en pratique, les amplitudes des pics des P réponses impulsionnelles sont sensiblement identiques, on peut commodément utiliser directement l'une quelconque de ces amplitudes pour normer le bruit, sans fausser excessivement le résultat.

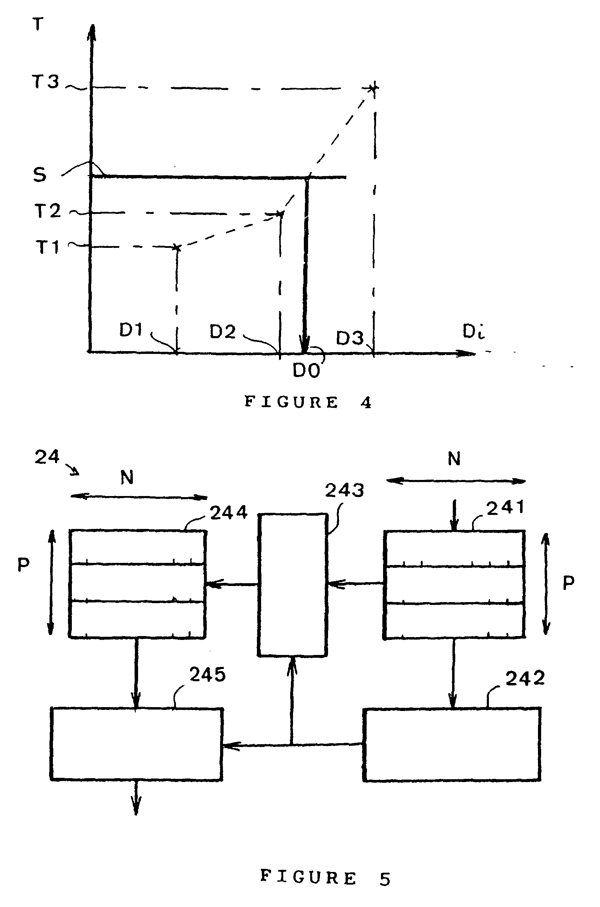

La figure 4 représente le taux de bruit T en fonction du débit Di de la liaison 3.

On y a reporté D = 3 points représentant les trois couples calculés de taux de bruit-débit T1-D1, T2-D2, T3-D3.

La courbe en pointillés reliant les D points ci-dessus est le résultat d'une estimation de la sensibilité de la valeur du taux de bruit T par rapport au débit Di.

Comme on peut l'observer, le taux de bruit T croît avec le débit Di, en particulier parce qu'un filtrage basse fréquence, ou intégration du bruit instantané, sur la période symbole, a une efficacité qui varie dans le même sens que la durée de cette période, donc qui diminue à débit croissant.

La droite horizontale représente un seuil haut S de taux de bruit admissible, connu par la littérature pour théoriquement correspondre au seuil minimal de qualité de transmission de la liaison 3, par exemple un taux d'erreur maximal de 10⁻⁹, appelé BER (Bit Error Ratio) dans la littérature.

On considère alors le couple de points voisins T2-D2, T3-D3 situés de part et d'autre du seuil S pour effectuer entre eux une interpolation, ici linéaire, et ainsi déterminer une valeur de débit maximal D0 d'intersection du segment d'interpolation avec le seuil S. Le débit D0 représente donc le débit limite de franchissement du seuil S au-dessus duquel la liaison 3 ne pourrait fonctionner avec la qualité requise, dans les conditions du test.

La valeur D0 est alors communiquée au modem 1 émetteur des trains de test, pour activer la liaison 3 à un débit limité en fonction du débit maximal D0.

En pratique, le débit des modems 1, 2 est choisi à une valeur normalisée parmi plusieurs possibles, si bien que celle juste en-dessous du débit D0 est sélectionnée pour transmettre des symboles de données utiles au niveau de puissance d'émission initialement retenu.

On peut toutefois prévoir d'émettre les données utiles à un niveau différent de celui des trains de test.

Si, par exemple, on décale le niveau d'émission d'un certain facteur, ou nombre déterminé de décibels, le bruit indépendant du signal utile reste constant et le taux de bruit T est décalé sensiblement d'autant, en sens opposé. Une correction visant à limiter ce décalage du taux de bruit T peut éventuellement être prévue, si l'on estime qu'il existe une part significative de bruit lié à l'amplitude du signal utile.

Il suffit alors de décaler le seuil S de sensiblement la valeur de décalage d'émission ou, de façon équivalente, de décaler en sens opposé les ordonnées T1, T2, T3 des D points calculés, pour que le décalage d'ordonnées s'effectue selon un facteur inverse du facteur de décalage des puissances d'émission.

On remarquera que si tous les D résultats de calcul fournissent des points T1-D1, T2-D2, T3-D3 de taux de bruit d'un même côté du seuil S, il est encore possible de déterminer une valeur D0, mais alors par extrapolation (ici à partir des points aux débits D1 et D2 si on s'était limité à D = 2).

De préférence, et en particulier si les points sont relativement éloignés du seuil S, la courbe extrapolée ou la courbe d'interpolation est établie à partir d'au moins trois points calculés de taux de bruit, afin de prendre en compte la courbure entre ceux-ci et ainsi mieux définir la courbe estimée par rapport à une courbe réelle de taux de bruit selon le débit Di qu'elle représente, ici estimée à partir d'un nombre discret (D) de points, c'est-à-dire passant par, ou à proximité de, ces points.

Le taux de bruit peut être exprimé en fonction de l'amplitude du bruit moyen par rapport à celle d'un signal, éventuellement bruité comme expliqué ci-dessus puisque le résultat du calcul du rapport n'est pas alors sensiblement faussé.

Il est toutefois préférable de composer ensemble les réponses impulsionnelles au débit Di considéré pour obtenir une réponse impulsionnelle moyenne RI0 pratiquement exempte de bruit.

Il est en outre commode de calculer le taux de bruit en fonction des énergies ou puissances. En effet, le bruit instantané étant supposé indépendant du signal utile, on considère qu'ils se sont statistiquement composés orthogonalement, c'est-à-dire que le carré de l'amplitude, ou puissance, du signal bruité est égal à la somme des carrés des amplitudes du signal utile et du bruit. La figure 5 représente le bloc de traitement 24, effectuant les calculs ci-dessus.

Dans le bloc de traitement 24, les coefficients représentant les P réponses impulsionnelles, chacune pour N symboles, d'un train 31, 32, 33, sont mémorisés dans une mémoire 241 reliée en sortie à un bloc de calcul 242 qui additionne entre eux les coefficients de même rang pour calculer la réponse impulsionnelle moyenne RI0 après division par P.

Par ailleurs, un bloc de calcul 243 reçoit les coefficients représentant la réponse impulsionnelle moyenne RI0 et compare chaque coefficient moyen au coefficient de même rang des P réponses impulsionnelles RI1, RI2 de la mémoire 241 pour déterminer, pour chacune de celles-ci, un spectre d'écarts de ses divers coefficients par rapport aux coefficients de même rang de la réponse impulsionnelle moyenne RI0.

La réponse impulsionnelle moyenne RI0 représente uniquement la distorsion de la liaison 3 au débit D1 ici considéré, puisque le bruit, a priori aléatoire et alternatif, a été éliminé par l'intégration que représente le calcul de la moyenne.

Les écarts ci-dessus représentent donc le bruit instantané au débit D1. Le bloc de calcul 243 élève au carré les N écarts calculés, pour les P mots, et les N x P résultats sont rangés dans une mémoire 244 homologue de la mémoire 241 mais contenant les écarts quadratiques, ou variance, donc des valeurs de bruit et non pas les amplitudes d'origine. Un bloc de calcul 245 effectue ensuite deux pluralités (N, P) de sommations, pour ajouter ensemble, pour chacun des P mots, les N écarts quadratiques du mot considéré et pour en outre ajouter entre eux ces résultats partiels afin d'obtenir la variance globale, l'ordre de prise en compte des N x P valeurs quadradiques élémentaires pour les cumuler pouvant être quelconque.

Après division par P, pour la normer, cette variance globale représente l'énergie ou puissance moyenne du bruit, qui est alors divisée par le carré de la valeur moyenne de la réponse impulsionnelle RI0, préalablement reçue et élevée au carré par le bloc 245 pour représenter l'énergie du signal utile. Le bloc 245 calcule alors le rapport signal utile/bruit, ou bruit/signal utile dans le cas de la figure 4, c'est-à-dire le taux de bruit en puissance.

Les calculs ci-dessus sont effectués pour chacun des D débits et fournissent donc les D valeurs de taux de bruit, qui sont ensuite exploitées, par le bloc de calcul 245, comme expliqué ci-dessus.

## Revendications

1. Procédé de mise en service d'une liaison de transmission de données (3) reliant deux modems (1, 2), dans lequel, dans une phase initiale de préactivation pour caractériser la qualité de la liaison,
- les modems échangent un train (31) de motifs prédéterminés (311, 312) de symboles de données à un débit spécifié (D1) et à un niveau d'émission déterminé, et
- chaque modem (1, 2) effectue un calcul de corrélations entre les motifs (311, 312) reçus et les motifs prédéterminés attendus, pour déterminer des courbes de réponse impulsionnelle (RI1, RI2) de la liaison (3) au débit spécifié (D1) et les comparer à une courbe de réponse impulsionnelle nominale afin d'en déterminer des différences, et ainsi estimer une qualité de liaison, et
- la liaison (3) est activée si la qualité de liaison est supérieure à un seuil minimal déterminé,
- on compare entre elles les courbes de réponse impulsionnelle (RI1, RI2) des motifs reçus (311, 312) pour mesurer leurs écarts relatifs et en calculer un taux de bruit (T1) du train de motifs (31) au débit considéré (D1),
- on effectue toutes les étapes ci-dessus pour une pluralité (D) de trains (31, 32, 33) ayant chacun un débit (Di) spécifique (D1, D2, D3),
procédé **caractérisé par le fait que**, dans la phase de préactivation,
- on estime la sensibilité de la valeur de taux de bruit (T) par rapport au débit (Di), en déterminant une courbe de taux de bruit à partir d'au moins deux points représentant deux paires des valeurs taux de bruit-débit associé (T2-D2, T3-D3),
- on recherche une valeur de débit maximal admissible (D0) correspondant à l'intersection de la courbe de taux de bruit (T) avec un seuil haut de taux de bruit (S) correspondant théoriquement à un seuil minimal de qualité admissible de la liaison (3), et
- on transmet, au modem (1, 2) émetteur des trains (31, 32, 33), la valeur de débit maximal (D0) pour activer la liaison (3) à un débit limité en fonction du débit maximal (D0).

2. Procédé selon la revendication 1, dans lequel, pour calculer le taux de bruit, à chaque débit,
- on compose ensemble les réponses impulsionnelles (RI1, RI2) pour obtenir une réponse impulsionnelle moyenne (RI0) représentant une moyenne du signal utile reçu,
- on calcule les écarts des réponses impulsionnelles (RI1, RI2) par rapport à la réponse impulsionnelle moyenne (RI0) et
- on calcule le taux de bruit à partir des écarts, rapportés à la moyenne du signal utile (RI0).

3. Procédé selon la revendication 2, dans lequel chaque réponse impulsionnelle (RI1, RI2) étant représentée par une rangée de coefficients en nombre déterminé, pour chaque débit :
- on calcule les écarts des divers coefficients des diverses réponses impulsionnelles (RI1, RI2) avec les coefficients de même rang de la réponse impulsionnelle moyenne associée (RIO),
- on calcule la valeur quadratique des écarts, et
- on calcule la somme des valeurs quadratiques pour obtenir une puissance moyenne de bruit, que l'on rapporte à la puissance moyenne de signal reçu pour obtenir le taux de bruit.

4. Procédé selon l'une des revendications 1 à 3, dans lequel, décalant d'une valeur déterminée le niveau d'émission de la liaison activée (3) par rapport au niveau d'émission lors de la préactivation, on décale sensiblement d'autant le seuil haut de taux de bruit (5) de façon relative par rapport aux taux de bruit calculés (T1, T2, T3), pour déterminer un nouveau débit maximal (D0).

5. Procédé selon l'une des revendications 1 à 4, dans lequel, chaque modem (1, 2) compare la valeur de débit maximal (D0) qu'il a déterminée et celle déterminée par l'autre modem (2, 1) pour retenir la plus faible pour des transmissions bidirectionnelles sur la liaison (3).

6. Procédé selon l'une des revendications 1 à 5, dans lequel on détermine la courbe de taux de bruit (T) par interpolation entre les points calculés.

7. Procédé selon l'une des revendications 1 à 5, dans lequel on détermine la courbe de taux de bruit (T) par extrapolation depuis les points calculés.

8. Modem pour la mise en oeuvre du procédé de la revendication 1, comportant des moyens de réception (21) pour recevoir, d'une liaison (3) de transmission de données, des signaux représentant des motifs de symboles de données, les moyens de réception (21) commandant des moyens de calcul (22, 23, 24) agencés pour comparer les motifs reçus à des motifs prédéterminés et en déterminer une courbe de réponse impulsionnelle de la liaison (3), le modem est **caractérisé par le fait que** les moyens de calcul (22, 23, 24) sont agencés pour déterminer une pluralité de trains de courbes de réponse impulsionnelle, correspondant à une pluralité de trains de motifs à une pluralité de débits respectifs, pour comparer entre elles les courbes de réponse impulsionnelle de chaque train et en déterminer des écarts relatifs représentant un taux de bruit au débit du train considéré et les moyens de calcul (22, 23, 24) sont agencés pour comparer les taux de bruit à une valeur prédéterminée de seuil haut de taux de bruit et en déterminer un débit maximal.

9. Modem selon la revendication 8, dans lequel les moyens de calcul (22, 23, 24) sont agencés pour déterminer, pour chaque train, une courbe de réponse impulsionnelle moyenne et en calculer une énergie correspondante, et agencés pour calculer la variance des courbes de réponse impulsionnelle et déterminer le taux de bruit par calcul du rapport entre la variance et l'énergie de la courbe de réponse impulsionnelle moyenne.

## Patentansprüche

1. Verfahren zur Inbetriebnahme einer Datenübertragungsverbindung (3), welche zwei Modems (1, 2) verbindet, wobei zum Charakterisieren der Verbindungsqualität in einer Anfangsphase der Voraktivierung
- die Modems eine Folge (31) von vorgegebenen Mustern (311, 312) von Datensymbolen mit einem spezifischen Durchsatz (D1) und mit einem vorgegebenen Sendepegel austauschen, und
- jedes Modem (1, 2) eine Berechnung von Korrelationen zwischen den empfangenen Mustern (311, 312) und den erwarteten vorgegebenen Mustern durchführt, um Impulsantwortkurven (RI1, RI2) der Verbindung (3) bei dem spezifischen Durchsatz (D1) zu bestimmen und sie mit einer Kurve einer nominalen Impulsantwort zu vergleichen, um daraus Unterschiede zu bestimmen und somit eine Verbindungsqualität einzuschätzen, und
- die Verbindung (3) aktiviert wird, wenn die Verbindungsqualität über einem vorgegebenen minimalen Schwellwert liegt,
- die Impulsantwortkurven (RI1, RI2) der empfangenen Muster (311, 312) miteinander verglichen werden, um ihre Relativabstände zu messen und daraus einen Rauschfaktor (T1) der Folge von Mustern (31) bei dem betrachteten Durchsatz (D1) zu berechnen, und
- sämtliche oben genannten Schritte für eine Vielzahl (D) von Folgen (31, 32, 33) durchgeführt werden, die jeweils einen spezifischen (D1, D2, D3) Durchsatz (Di) aufweisen,
wobei das Verfahren **dadurch gekennzeichnet ist,**
**daß** in der Voraktivierungsphase
- die Empfindlichkeit des Wertes für den Rauschfaktor (T1) bezogen auf den Durchsatz (Di) geschätzt wird durch Bestimmen einer Kurve für den Rauschfaktor, ausgehend von mindestens zwei Punkten, die zwei Paare von Werten für den Rauschfaktor mit zugeordnetem Durchsatz (T2-D2, T3-D3) darstellen,
- ein Wert für den maximal zulässigen Durchsatz (D0) gesucht wird, welcher dem Schnittpunkt der Kurve für den Rauschfaktor (T) mit einem hohen Rauschfaktorschwellwert (S) entspricht und theoretisch einem minimalen Schwellwert der zulässigen Qualität der Verbindung (3) entspricht, und
- der Wert des maximalen Durchsatzes (D0) zum Aktivieren der Verbindung (3) mit einem Wert, der in Abhängigkeit von dem maximalen Durchsatz (D0) beschränkt ist, an das Modem (1, 2) übertragen wird, welches die Folgen (31, 32, 33) sendet.

2. Verfahren nach Anspruch 1,
bei dem zum Berechnen des Rauschfaktors bei jedem Durchsatz
- die Impulsantworten (RI1, RI2) zusammengesetzt werden, um eine durchschnittliche Impulsantwort (RIO) zu erhalten, welche einen Durchschnitt des nützlichen empfangenen Signals darstellt,
- die Abstände der Impulsantworten (RI1, RI2) bezogen auf die durchschnittliche Impulsantwort (RIO) berechnet werden, und
- der Rauschfaktor ausgehend von den Abständen bezogen auf den Durchschnitt des nützlichen empfangenen Signals (RIO) berechnet wird.

3. Verfahren nach Anspruch 2,
bei dem jede Impulsantwort (RI1, RI2) durch einen Bereich von Koeffizienten mit einer vorgegebenen Anzahl dargestellt ist, wobei für jeden Durchsatz:
- die Abstände der verschiedenen Koeffizienten der verschiedenen Impulsantworten (RI1, RI2) mit den Koeffizienten eines gleichen Ranges der zugeordneten durchschnittlichen Impulsantwort (RIO) berechnet werden,
- der Quadratwert der Abstände berechnet wird, und
- die Summe der Quadratwerte berechnet wird, um eine durchschnittliche Rauschleistung zu erhalten, welche mit der durchschnittlichen Leistung des Empfangssignals in ein Verhältnis gesetzt wird, um den Rauschfaktor zu erhalten.

4. Verfahren nach einem der Ansprüche 1 bis 3,
bei dem durch Herabstufen des Sendepegels der aktivierten Verbindung (3) um einen vorgegebenen Wert, bezogen auf den Sendepegel bei der Voraktivierung, der hohe Schwellwert des Rauschfaktors (5) relativ zu den berechneten Rauschfaktoren (T1, T2, T3) im wesentlichen so weit herabgestuft wird, daß ein neuer maximaler Durchsatz (D0) bestimmt wird.

5. Verfahren nach einem der Ansprüche 1 bis 4,
bei dem jedes Modem (1, 2) den von ihm bestimmten und den von dem anderen Modem (2, 1) bestimmten Wert des maximalen Durchsatzes (D0) vergleicht, um den niedrigeren Wert für bidirektionale Übertragungen auf der Verbindung (3) beizubehalten.

6. Verfahren nach einem der Ansprüche 1 bis 5,
bei dem die Kurve für den Rauschfaktor (T) durch Interpolation zwischen den berechneten Punkten bestimmt wird.

7. Verfahren nach einem der Ansprüche 1 bis 5,
bei dem die Kurve für den Rauschfaktor (T) durch Extrapolation von den berechneten Punkten bestimmt wird.

8. Modem zur Durchführung des Verfahrens nach Anspruch 1,
welches Empfangseinrichtungen (21) zum Empfangen von Signalen, welche Muster von Datensymbolen darstellen, von einer Datenübertragungsverbindung (3) aufweist, wobei die Empfangseinrichtungen (21) Recheneinrichtungen (22, 23, 24) steuern, welche dazu ausgelegt sind, die empfangenen Muster mit vorgegebenen Mustern zu vergleichen und daraus eine Impulsantwortkurve der Verbindung (3) zu bestimmen,
wobei das Modem **dadurch gekennzeichnet ist,**
**daß** die Recheneinrichtungen (22, 23, 24) dazu ausgelegt sind, eine Vielzahl von Folgen von Impulsantwortkurven zu bestimmen, welche einer Vielzahl von Musterfolgen bei einer Vielzahl von jeweiligen Durchsätzen entsprechen, um die Impulsantwortkurven für jede Folge untereinander zu vergleichen und daraus relative Abstände zu bestimmen, die einen Rauschfaktor bei dem Durchsatz der betrachteten Folge darstellen,
und **daß** die Recheneinrichtungen (22, 23, 24) dazu ausgelegt sind, die Rauschfaktoren mit einem vorgegebenen Wert eines hohen Schwellwertes des Rauschfaktors zu vergleichen und daraus einen maximalen Durchsatz zu bestimmen.

9. Modem nach Anspruch 8,
bei dem die Recheneinrichtungen (22, 23, 24) dazu ausgelegt sind, für jede Folge eine durchschnittliche Impulsantwortkurve zu bestimmen und daraus eine entsprechende Energie zu berechnen, und ferner dazu ausgelegt sind, die Varianz der Impulsantwortkurven zu berechnen und den Rauschfaktor durch Berechnen des Verhältnisses zwischen der Varianz und der Energie der durchschnittlichen Impulsantwortkurve zu bestimmen.

## Claims

1. Process for setting up and using a data transmission link (3) connecting two modems (1, 2) whereby, in an initial pre-activation stage to characterise the quality of the connection,
- the modems exchange a series (31) of predetermined motifs (311, 312) of data symbols at a specified delivery (D1) and at a determined transmission level, and
- each modem (1, 2) makes a calculation of correlations between the motifs (311, 312) received and the predetermined motifs expected in order to determine pulse response curves (R11, R12) of the link (3) at the specified delivery (D1) and compare them with a nominal pulse response curve in order to determine differences from them and thus estimate the quality of the connection, and
- the link (3) is activated if the quality of the connection is higher than a determined minimum threshold,
- they are compared with each other in respect of the pulse response curves (R11, R12) of the motifs received (311, 312) to measure their relative differences and calculate therefrom a noise factor (T1) of the series of motifs (31) at the delivery considered (D1),
- all the above stages are carried out for a number (D) of series (31, 32, 33), each with a delivery (Di) which is specific (D1, D2, D3),
a process **characterised in that**, in the pre-activation stage:
- the sensitivity of the figure for the noise factor (T) is estimated in relation to the delivery (Di) by determining a noise factor curve from at least two points representing two pairs of associated noise factor / associated delivery figures (T2:D2, T3:D3)
- a maximum permissible delivery figure (D0) is found corresponding to the intersection of the curve for the noise factor (T) with a top-of-noise factor threshold (S) theoretically corresponding to a minimum permissible quality of the connection (3), and
- to the modem (1, 2), transmitter of the series (31, 32, 33), there is transmitted the figure for maximum delivery (D0) in order to activate the connection (3) at a delivery limited as a function of the maximum delivery (D0).

2. Process according to Claim 1 whereby, in order to calculate the noise factor, at each delivery.
- pulse responses (R11, R12) are composed together in order to obtain a mean pulse response (R10) representing an average of the working signal received,
- the differences in pulse responses (R11, R12) in relation to the mean pulse response (R10) are calculated, and
- the noise factor is calculated from differences related to the average of the working signal (R10).

3. Process according to Claim 2 whereby each pulse response (R11, R12) being represented by a row of coefficients in a specific number, for each delivery:
- the differences of the various coefficients of the various pulse responses (R11, R12) compared with the coefficients of the same row as the associated average pulse response (R10) are calculated,
- the quadratic value for the differences are calculated, and
- the sum of the quadratic values is calculated to find a mean noise power, which is related to the average power of the received signal to produce the noise factor.

4. Process according to one of the Claims I to 3 whereby, offsetting by a predetermined figure the transmission level of the activated connection (3) in relation to the transmission level at the time of the pre-activation, the top-of-noise factor threshold (5) is more or less relatively offset by as much in relation to the calculated noise factors (T1, T2, T3), in order to determine a new maximum delivery (D0).

5. Process according to one of the Claims 1 to 4 whereby each modem (1, 2) compares the maximum delivery (D0) figure which it has determined and that determined by the other model (2, 1) in order to retain the lowest for two-way transmissions on the connection (3).

6. Process according to one of the Claims 1 to 5 whereby the noise factor (T) curve is determined by interpolation between the points calculated.

7. Process according to one of the Claims 1 to 5 whereby the noise factor (T) curve is determined by extrapolation from the points calculated.

8. Modem for using the process in Claim 1, comprising receiving means (21) for receiving, from a data transmission link (3), signals representing motifs of data symbols, the receiving means (21) controlling means of calculation (22, 23, 24) arranged for comparing the motifs received with predetermined motifs and determining from them a pulse response curve for the connection (3); the modem is **characterised in that** the means of calculation (22, 23, 24) are arranged for determining a number of series of pulse response curves, corresponding to a number of series of motifs with a number of respective deliveries, in order to compare among them the pulse response curves of each series and determine from this the relative differences representing a noise factor at the delivery of the series in question and the means of calculation (22, 23, 24) are arranged for comparing the noise factors with a predetermined figure for the top-of-noise factor threshold and from this determining a maximum delivery.

9. Modem according to Claim 8, whereby the means of calculation (22, 23, 24) are arranged to determine, for each series, a mean pulse response curve and calculate a corresponding energy from it, and are arranged to calculate the variance of the pulse response curves and determine the noise factor by calculating the relationship between the variance and the energy in the mean pulse response curve.
